# EUROPEAN PATENT APPLICATION

(11) **EP 4 793 638 A1**
(43) Date of publication of application: **19.08.2026**
(21) Application number: 23955464.5
(22) Date of filing: 12.10.2023
(51) Int. Cl.: G01N 27/90, H02K 15/02

(54) **DEFECT DETECTION DEVICE AND METHOD FOR MANUFACTURING DEFECT DETECTION DEVICE**

(71) Applicant: Mitsubishi Generator Co., Ltd., Kobe City, Hyogo 652-8555 (JP)
(72) Inventor: URATA Mikiyasu, Tokyo 100-8332 (JP); KATO Takashi, Tokyo 100-8332 (JP); YAMAGUCHI Takehiko, Tokyo 100-8332 (JP); KUZE Yoshiharu, Tokyo 100-8332 (JP); JINNO Kentaro, Tokyo 100-8332 (JP); SHIGENAGA Yasunori, Tokyo 100-8332 (JP); OTOMO Tsutomu, Tokyo 100-8332 (JP); MURAMATSU Seijiro, Tokyo 100-8332 (JP)
(74) Representative: Witte, Weller & Partner Patentanwälte mbB
(86) International application number: PCT/JP2023/037083
(87) International publication number: WO 2025/079216

(57) **Abstract**

This defect detection device is a defect detection device for detecting a defect in a rotor core that has a columnar shape centered on an axial line and that has a plurality of slots arrayed at an interval in a circumferential direction. Each of the slots has: a neck portion composed of a pair of first surfaces that are open toward an outer periphery side and that extend in a radial direction, when viewed in an axial line direction; a dovetail portion composed of a pair of inclined surfaces that are connected to the neck portion and whose interval therebetween in the circumferential direction gradually increases toward an inner periphery side; and a trunk portion composed of a pair of second surfaces that are connected to the dovetail portion and that extend in the radial direction. The defect detection device includes: a device body having a first inspection surface that comes into contact with the first surface, an inclined inspection surface that comes into contact with the inclined surface, and a second inspection surface that comes into contact with the second surface; a plurality of array coils buried on inner sides of the first inspection surface, the inclined inspection surface, and the second inspection surface; and a plurality of permanent magnets provided together with the array coils.

## Description

### TECHNICAL FIELD

The present disclosure relates to a defect detection device and a method for manufacturing the defect detection device.

### BACKGROUND ART

As for a large generator (electric motor) used in a power plant or the like, a defect in each part caused by operation over years needs to be detected with high accuracy, in order to realize stable operation. In particular, a load due to a centrifugal force is applied to a rotor core, which is a rotary body. Therefore, in each part of the rotor core, a defect such as a crack due to concentration of stress easily occurs. Here, into a slot formed in the outer peripheral surface of the rotor core in order to accommodate a coil, a member referred to as a wedge for preventing protrusion of the coil is inserted. The wedge is fitted, from the inner periphery side, to a dovetail portion formed at the inner surface of the slot. Since a centrifugal force is applied to the wedge, a load is easily applied to the dovetail portion, in particular.

As a technology for detecting a defect in the dovetail portion, one described in Patent Document 1 below is known. The device according to Patent Document 1 below mainly includes a jig capable of coming into contact with the inner surface of a slot including a dovetail portion, and a pressing mechanism for pressing the jig against the slot.

### CITATION LIST

### PATENT DOCUMENT

Patent Document 1: Japanese Patent No. 6121711

### SUMMARY OF THE INVENTION

### PROBLEM TO BE SOLVED BY THE INVENTION

However, in a case where the jig is pressed against the inner surface of the slot only by the pressing mechanism as above, when the jig is moved along the slot, the jig may float up (causing lift-off), which may influence the detection accuracy of a defect. In addition, in general, since the rotor core of an electric motor is made of a magnetic material, there is also a drawback that the detection accuracy decreases due to magnetic noise.

The present disclosure has been made in order to solve the above problems. An object of the present disclosure is to provide a defect detection device that can stably perform highly accurate defect detection, and a method for manufacturing the defect detection device.

### MEANS TO SOLVE THE PROBLEM

In order to solve the above problems, a defect detection device according to the present disclosure is a defect detection device for detecting a defect in a rotor core that has a columnar shape centered on an axial line and that has a plurality of slots recessed toward a radially inner side from an outer peripheral surface and arrayed at an interval in a circumferential direction. Each of the slots has: a neck portion composed of a pair of first surfaces that are open toward an outer periphery side and that extend in a radial direction, when viewed in an axial line direction; a dovetail portion composed of a pair of inclined surfaces that are connected to the neck portion and whose interval therebetween in the circumferential direction gradually increases toward an inner periphery side; and a trunk portion composed of a pair of second surfaces that are connected to the dovetail portion and that extend in the radial direction. The defect detection device includes: a device body having a first inspection surface that comes into contact with the first surface, an inclined inspection surface that comes into contact with the inclined surface, and a second inspection surface that comes into contact with the second surface; a plurality of array coils buried on inner sides of the first inspection surface, the inclined inspection surface, and the second inspection surface; and a plurality of permanent magnets provided together with the array coils.

A method for manufacturing a defect detection device according to the present disclosure is a method for manufacturing the defect inspection device described above, and includes: a step of acquiring dimensions of each part with respect to a shape of the slot; a step of forming the device body by three-dimensional additive manufacturing, on the basis of the dimensions; and a step of mounting the array coils and the permanent magnets.

### EFFECT OF THE INVENTION

According to the present disclosure, it is possible to provide a defect detection device that can stably perform highly accurate defect detection, and a method for manufacturing the defect detection device.

### BRIEF DESCRIPTION OF THE DRAWINGS

[FIG. 1] FIG. 1 is a cross-sectional view showing a configuration of a rotor core of an electric motor.
[FIG. 2] FIG. 2 is an enlarged view of a main part of the rotor core and is a cross-sectional view showing a configuration of a defect detection device according to an embodiment of the present disclosure.
[FIG. 3] FIG. 3 is a front view showing a configuration of the defect detection device according to the embodiment of the present disclosure.
[FIG. 4] FIG. 4 is a diagram illustrating arrangement of array coils according to the embodiment of the present disclosure, and is a development of each surface of a device body.
[FIG. 5] FIG. 5 is a flowchart showing steps of a method for manufacturing the defect detection device according to the embodiment of the present disclosure.

### DESCRIPTION OF EMBODIMENTS

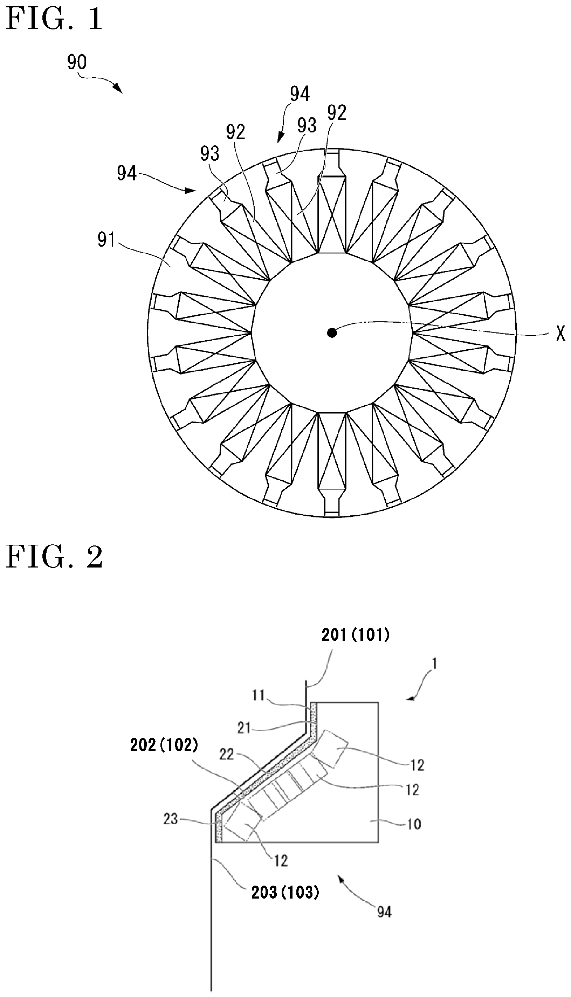

Hereinafter, a defect detection device 1 according to an embodiment of the present disclosure and a method for manufacturing the same will be described with reference to FIG. 1 to FIG. 5.

The defect detection device 1 according to the present embodiment is suitably used in defect detection on the inner side of a slot 94 formed in a rotor 90 of an electric motor.

### (Configuration of rotor)

As shown in FIG. 1, the rotor 90 includes a rotor core 91, coils 92, and wedges 93. The rotor core 91 has a columnar shape centered on an axial line X. In the outer peripheral surface of the rotor core 91, a plurality of slots 94 recessed toward the radially inner side and arrayed at an interval in the circumferential direction are formed. The coils 92 are respectively accommodated in the slots 94. The opening on the outer periphery side of each slot 94 is closed by a wedge 93 in order to prevent protrusion of the coil 92 due to a centrifugal force.

More specifically, as shown in FIG. 2, the slot 94 has a neck portion 101, a dovetail portion 102, and a trunk portion 103. The neck portion 101 is composed of a pair of first surfaces 201 that are open toward the outer periphery side and that extend in the radial direction, when viewed in the axial line X direction. The dovetail portion 102 is positioned on the radially inner side of the neck portion 101. The dovetail portion 102 is composed of a pair of inclined surfaces 202 that are connected to the neck portion 101 and whose interval therebetween in the circumferential direction gradually increases toward the inner periphery side. The trunk portion 103 is composed of a pair of second surfaces 203 that are connected to the dovetail portion 102 and that extend in the radial direction.

The wedge 93 is inserted in the axial line X direction into the slot 94 having the neck portion 101, the dovetail portion 102, and the trunk portion 103. Due to engagement of the wedge 93 with the inclined surfaces of the dovetail portion 102, protrusion to the radially outer side of the wedge 93 is prevented.

### (Configuration of defect detection device)

As shown in FIG. 2, the defect detection device 1 includes a device body 10, a wear-resistant member 11, array coils 12, and permanent magnets 13.

### (Device body)

The device body 10 has a first inspection surface 21, an inclined inspection surface 22, and a second inspection surface 23. The first inspection surface 21 is capable of coming into contact with the first surface 201 of the slot 94. The inclined inspection surface 22 is capable of coming into contact with the inclined surface 202 of the slot 94. The second inspection surface 23 is capable of coming into contact with the second surface 203 of the slot 94. That is, the dimensions of each part of the device body 10 are determined such that, when the device body 10 is inserted in the slot 94, the first surface 201 comes into contact with the first inspection surface 21, the inclined surface comes into contact with the inclined inspection surface 22, and the second surface 203 comes into contact with the second inspection surface 23, simultaneously. In a case where the later-described wear-resistant member 11 is provided, the above surfaces do not come into direct contact with each other, but the expression of "contact" here is assumed to include the state where the surfaces are opposed to each other via the wear-resistant member 11.

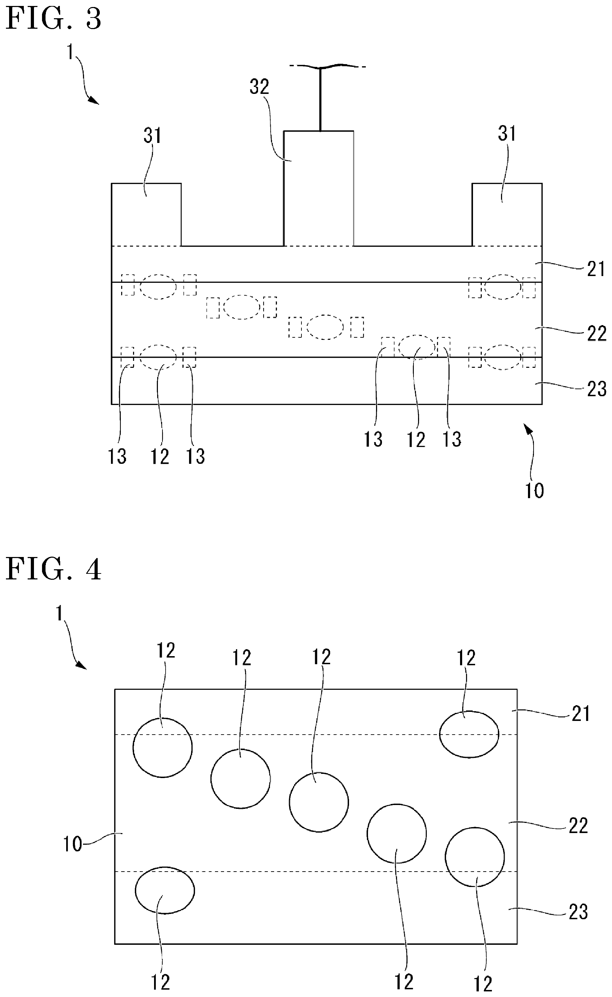

Further, as shown in FIG. 3, at the end surface on the radially outer side of the device body 10, a pair of grip portions 31 protruding toward the radially outer side are formed. The grip portions 31 are used when manual scanning with the device body 10 is performed along the slot 94. Between the grip portions 31, a wire accommodation portion 32 for routing various wires to the outside is formed. A method for manufacturing the device body 10 will be described later.

### (Wear-resistant member)

The first inspection surface 21, the inclined inspection surface 22, and the second inspection surface 23 of the device body 10 are covered by the wear-resistant member 11. The wear-resistant member 11 is provided in order to prevent occurrence of wear/damage at these surfaces when scanning with the device body 10 is performed along the slot 94. The wear-resistant member 11 has a thin film shape formed of a so-called engineering plastic. Specifically, for the wear-resistant member 11, polyacetal or PEEK (polyether ether ketone) is suitably used.

### (Array coil)

A plurality of array coils 12 are buried on the inner side of the device body 10. Specifically, the array coils 12 are buried on the inner side of the first inspection surface 21, the inclined inspection surface 22, and the second inspection surface 23. As shown in FIG. 2 to FIG. 4, when viewed in the axial line X direction, the positions in the radial direction of the array coils 12 are different from each other, and parts of the array coils 12 overlap each other. Specifically, from one side toward the other side in the axial line X direction, the position in the radial direction of the array coil 12 gradually changes to the radially inner side. In addition, at each of an end portion on one side and an end portion on the other side in the axial line X direction, a pair of array coils 12 arrayed at an interval in the radial direction are disposed. The array coils 12 disposed at these end portions are disposed so as to cover the corner portion between the first inspection surface 21 and the inclined inspection surface 22 and the corner portion between the inclined inspection surface 22 and the second inspection surface 23. That is, the axes of the array coils 12 are oriented to the corresponding corner portions.

Although not shown in detail, each array coil 12 includes an excitation coil and a detection coil. The excitation coil generates eddy current in the vicinity of each surface of the slot 94. The detection coil detects a disturbance component when this eddy current has been disturbed by a defect. The central axes of the excitation coil and the detection coil cross each other. That is, this array coil 12 is a cross coil. Each coil may also have both roles of the excitation coil and the detection coil.

When the maximum outer diameter of the array coil 12, which is a cross coil, is defined as D, it is desirable that the array coils 12 adjacent to each other overlap each other by D/2 or more in the radial direction.

### (Permanent magnet)

Each of the above array coils 12 is surrounded by a pair of permanent magnets 13 in the axial line X direction. The permanent magnet 13 has a function of bringing the device body 10 into close contact with the inner surface of the slot 94 by magnetic force. In addition, since the rotor 90 is mainly formed of a magnetic material, it is possible to maintain a state that is as close as possible to magnetic saturation due to the magnetic force of the permanent magnet 13, in order to reduce magnetic noise during defect detection.

### (Method for manufacturing defect detection device)

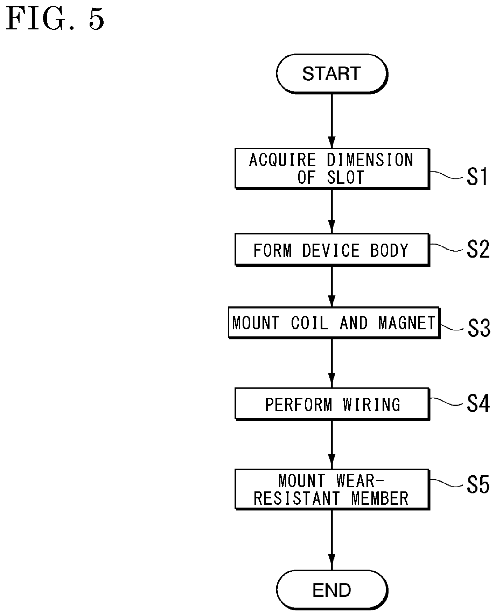

Next, a method for manufacturing the defect detection device 1 above will be described with reference to FIG. 5. As shown in FIG. 5, first, dimensions of each part of the slot 94 are acquired (step S1). The dimensions of each part here denote, for example, the lengths of the first surface 201, the inclined surface, and the second surface 203 when viewed in the axial line X direction, and the crossing angle between these surfaces.

Next, on the basis of the above dimensions, the device body 10 is formed by three-dimensional additive manufacturing (step S2). Then, the array coils 12 and the permanent magnets 13 are mounted to the device body 10 (step S3), and wiring of each part is performed (step S4). Lastly, the above wear-resistant member 11 is mounted, whereby the defect detection device 1 is completed (step S5).

### (Effects)

Here, as for a large generator (electric motor) used in a power plant or the like, a defect in each part caused by operation over years needs to be detected with high accuracy, in order to realize stable operation. In particular, a load due to a centrifugal force is applied to the rotor 90, which is a rotary body. Therefore, in each part of the rotor core 91, a defect such as a crack due to concentration of stress easily occurs. Here, into a slot 94 formed in the outer peripheral surface of the rotor core 91 in order to accommodate a coil 92, a member referred to as a wedge 93 for preventing protrusion of the coil 92 is inserted. The wedge 93 is fitted, from the inner periphery side, to the dovetail portion 102 formed at the inner surface of the slot 94. Since a centrifugal force is applied to the wedge 93, a load is easily applied to the dovetail portion 102, in particular.

As a technology for detecting a defect in the dovetail portion 102, conventionally, one that mainly includes a jig capable of coming into contact with the inner surface of the slot 94 including the dovetail portion 102, and a pressing mechanism for pressing the jig against the slot 94, has been proposed.

However, in a case where the jig is pressed against the inner surface of the slot 94 only by the pressing mechanism as above, when the jig is moved along the slot 94, the jig may float up (causing lift-off), which may influence the detection accuracy of a defect. In addition, in general, since the rotor core 91 of an electric motor is made of a magnetic material, there is also a drawback that the detection accuracy decreases due to magnetic noise. In order to eliminate these drawbacks, the configurations described above are adopted in the present embodiment.

According to the above configuration, since the shape itself of the device body 10 corresponds to the shape of the slot 94, the array coils 12 can be brought close to the surfaces of the slot 94. Therefore, the defect detection accuracy can be further improved. Conversely, when the device body 10 that does not correspond to the shape of the slot 94 is used, the separation distance between the array coil 12 and each surface increases, and thus, there is a possibility that lift-off noise is generated. According to the above configuration, such a possibility can be largely reduced. Further, since the permanent magnets 13 are provided, magnetic noise due to the rotor core 91 formed of a magnetic material can be removed through magnetic saturation. Accordingly, an accurate inspection waveform from which noise has been removed can be obtained, and thus, the detection accuracy of a defect can be further improved. That is, due to the provision of the permanent magnets 13, two effects of ensuring close contact of the device body 10 to the slot 94 and cancellation of magnetic noise can be simultaneously obtained.

According to the above configuration, the positions in the radial direction of the plurality of array coils 12 are different, and parts of the plurality of array coils 12 overlap each other in the radial direction. Therefore, when the device body 10 is moved in the axial line X direction, it is possible to perform defect inspection based on eddy current without omission, over the entire region in the radial direction of each surface. Accordingly, possibility of occurrence of overlooking of a defect is greatly reduced, and thus, reliability of the defect detection device 1 can be still further enhanced.

Here, since concentration of stress occurs at the corner portion between the first surface 201 and the inclined surface 202 and the corner portion between the inclined surface 202 and the second surface 203, a defect such as a crack tends to easily occur. According to the above configuration, since the array coils 12 are disposed so as to correspond to the corner portions, a defect in the corner portions can be more actively and finely detected. In particular, since the axes of the array coils 12 are oriented to the corner portions, a defect can be detected with high accuracy.

According to the above configuration, since a pair of permanent magnets 13 are disposed so as to sandwich each array coil 12 in the vicinity thereof, two effects of magnetic saturation due to the permanent magnets 13 and prevention of lift-off of the array coil 12 can be both realized at a high level.

According to the above configuration, when an operator grips the grip portions 31 and moves the device body 10 in the axial line X direction, scanning of each surface can be stably and smoothly performed along the slot 94 without causing lift-off. Accordingly, the detection accuracy of a defect can be still further enhanced.

According to the above configuration, due to the provision of the wear-resistant member 11, even when inspection has been performed a plurality of times, wear or damage is less likely to occur in the device body 10 itself. Accordingly, the defect inspection device can be repeatedly used for a long period.

According to the above method, the device body 10 is formed in a custom-made manner by three-dimensional additive manufacturing. Accordingly, individual differences between respective rotor cores 91 with respect to the dimensions of the slot 94 can be absorbed. Therefore, close contact between the array coil 12 and each surface is further improved, and the detection accuracy of a defect can be still further enhanced. In particular, by using three-dimensional additive manufacturing, a plurality of device bodies 10 can be inexpensively created, and thus, the balance between ensuring accuracy of the inspection and cost reduction can be maintained at a high level. Eventually, it becomes possible to contribute to stable operation of the electric motor, and to further improve availability of the plant.

### (Other embodiments)

The embodiment of the present disclosure has been described in detail with reference to the drawings. However, the specific configuration is not limited to this embodiment, and design modifications and the like within the gist of the present disclosure are also included.

For example, the number of array coils 12 described in the above embodiment is an example, and can be changed as appropriate in accordance with the design or the specification.

The application target of the defect detection device 1 is not limited to an electric motor used for power generation in a plant, and the defect detection device 1 can be applied to any electric motor that has the slot 94.

Further, in the above embodiment, an example in which the device body 10 is created by three-dimensional additive manufacturing has been described. However, as long as the cost and time permit, the device body 10 can also be created by another method. For example, a method in which the device body 10 is created through injection molding using a synthetic resin is conceivable.

Other than this, the positions where the grip portions 31 are provided and the shape thereof are examples and can be changed as appropriate in accordance with the design or the specification.

Furthermore, a configuration in which the wear-resistant member 11 is not provided can also be adopted. In this case, the lift-off amount is reduced by the amount corresponding to the wear-resistant member 11, and thus, the defect detection accuracy can be further improved.

### <Additional note>

The defect detection device 1 described in each embodiment and the method for manufacturing the defect inspection device are understood as below, for example.
(1) A defect detection device 1 according to a first aspect is a defect detection device 1 for detecting a defect in a rotor core 91 that has a columnar shape centered on an axial line X and that has a plurality of slots 94 recessed toward a radially inner side from an outer peripheral surface and arrayed at an interval in a circumferential direction,
   each of the slots 94 having
      a neck portion 101 composed of a pair of first surfaces 201 that are open toward an outer periphery side and that extend in a radial direction, when viewed in an axial line X direction,
      a dovetail portion 102 composed of a pair of inclined surfaces 202 that are connected to the neck portion 101 and whose interval therebetween in the circumferential direction gradually increases toward an inner periphery side, and
      a trunk portion 103 composed of a pair of second surfaces 203 that are connected to the dovetail portion 102 and that extend in the radial direction,
   the defect detection device 1 including:
      a device body 10 having a first inspection surface 21 that comes into contact with the first surface 201, an inclined inspection surface 22 that comes into contact with the inclined surface 202, and a second inspection surface 23 that comes into contact with the second surface 203;
      a plurality of array coils 12 buried on inner sides of the first inspection surface 21, the inclined inspection surface 22, and the second inspection surface 23; and
      a plurality of permanent magnets 13 provided together with the array coils 12.

According to the above configuration, since the shape itself of the device body 10 corresponds to the shape of the slot 94, the array coils 12 can be brought close to the surfaces of the slot 94. Therefore, the defect detection accuracy can be further improved. Further, since the permanent magnets 13 are provided to the device body 10, magnetic noise due to the rotor core 91 formed of a magnetic material can be removed through magnetic saturation based on magnetic force of the permanent magnets 13. Accordingly, the detection accuracy of a defect can be further improved.

(2) The defect detection device 1 according to a second aspect is the defect detection device 1 according to (1), wherein, when viewed in the axial line X direction, positions in the radial direction of the plurality of array coils 12 are different from each other, and parts of the plurality of array coils 12 overlap each other in the radial direction.

According to the above configuration, the positions in the radial direction of the plurality of array coils 12 are different, and parts of the plurality of array coils 12 overlap each other in the radial direction. Therefore, when the device body 10 is moved in the axial line X direction, it is possible to perform inspection without omission, over the entire region in the radial direction of each surface.

(3) The defect detection device 1 according to a third aspect is the defect detection device 1 according to (1) or (2), wherein some of the plurality of array coils 12 are disposed at each of a corner portion between the first inspection surface 21 and the inclined inspection surface 22 and a corner portion between the inclined inspection surface 22 and the second inspection surface 23.

Here, since concentration of stress occurs at the corner portions, a defect such as a crack tends to easily occur. According to the above configuration, since the array coils 12 are disposed so as to correspond to the corner portions, a defect in the corner portions can be more actively and finely detected.

(4) The defect detection device 1 according to a fourth aspect is the defect detection device 1 according to any one of aspects of (1) to (3), wherein the permanent magnets 13 are provided in pairs so as to sandwich each array coil 12 from both sides thereof in the axial line X direction.

According to the above configuration, since a pair of permanent magnets 13 are disposed so as to sandwich each array coil 12 in the vicinity thereof, two effects of magnetic saturation due to the permanent magnets 13 and prevention of lift-off of the array coil 12 can be obtained.

(5) The defect detection device 1 according to a fifth aspect is the defect detection device 1 according to any one of aspects of (1) to (4), further including grip portions 31 respectively provided at end portions on both sides in the axial line X direction of the device body 10.

According to the above configuration, when an operator grips the grip portions 31 and moves the device body 10 in the axial line X direction, scanning of each surface can be stably and smoothly performed along the slot 94 without causing lift-off. Accordingly, the detection accuracy of a defect can be still further enhanced.

(6) The defect detection device 1 according to a sixth aspect is the defect detection device 1 according to any one of aspects of (1) to (5), further including a wear-resistant member 11 having a film shape that covers the first inspection surface 21, the inclined inspection surface 22, and the second inspection surface 23.

According to the above configuration, due to the provision of the wear-resistant member 11, even when inspection has been performed a plurality of times, wear or damage is less likely to occur in the device body 10 itself. Accordingly, the defect inspection device can be repeatedly used for a long period.

(7) The defect detection device 1 according to a seventh aspect is a method for manufacturing the defect detection device 1 according to any one of aspects of (1) to (6), the method including: a step of acquiring dimensions of each part with respect to a shape of the slot 94; a step of forming the device body 10 by three-dimensional additive manufacturing, on the basis of the dimensions; and a step of mounting the array coils 92 and the permanent magnets 13.

According to the above method, through the custom-made manufacturing according to three-dimensional additive manufacturing, individual differences with respect to the dimensions of the slot 94 can be absorbed. Accordingly, close contact between the array coil 12 and each surface is further improved, and the detection accuracy of a defect can be still further enhanced.

### INDUSTRIAL APPLICABILITY

According to the defect detection device 1 and the method for manufacturing the defect detection device 1 described above, highly accurate defect detection can be stably performed.

### DESCRIPTION OF THE REFERENCE CHARACTERS

- 1: defect detection device
- 10: device body
- 11: wear-resistant member
- 12: array coil
- 13: permanent magnet
- 21: first inspection surface
- 22: inclined inspection surface
- 23: second inspection surface
- 31: grip portion
- 32: wire accommodation portion
- 90: rotor
- 91: rotor core
- 92: array coil
- 93: wedge
- 94: slot
- 101: neck portion
- 102: dovetail portion
- 103: trunk portion
- 201: first surface
- 202: inclined surface
- 203: second surface
- X: axial line

## Claims

1. A defect detection device for detecting a defect in a rotor core that has a columnar shape centered on an axial line and that has a plurality of slots recessed toward a radially inner side from an outer peripheral surface and arrayed at an interval in a circumferential direction,
each of the slots having
a neck portion composed of a pair of first surfaces that are open toward an outer periphery side and that extend in a radial direction, when viewed in an axial line direction,
a dovetail portion composed of a pair of inclined surfaces that are connected to the neck portion and whose interval therebetween in the circumferential direction gradually increases toward an inner periphery side, and
a trunk portion composed of a pair of second surfaces that are connected to the dovetail portion and that extend in the radial direction,
the defect detection device comprising:
a device body having a first inspection surface that comes into contact with the first surface, an inclined inspection surface that comes into contact with the inclined surface, and a second inspection surface that comes into contact with the second surface;
a plurality of array coils buried on inner sides of the first inspection surface, the inclined inspection surface, and the second inspection surface; and
a plurality of permanent magnets provided together with the array coils.

2. The defect detection device according to claim 1, wherein, when viewed in the axial line direction, positions in the radial direction of the plurality of array coils are different from each other, and parts of the plurality of array coils overlap each other in the radial direction.

3. The defect detection device according to claim 1 or 2, wherein some of the plurality of array coils are disposed at each of a corner portion between the first inspection surface and the inclined inspection surface and a corner portion between the inclined inspection surface and the second inspection surface.

4. The defect detection device according to claim 1 or 2, wherein the permanent magnets are provided in pairs so as to sandwich each array coil from both sides thereof in the axial line direction.

5. The defect detection device according to claim 1 or 2, further comprising grip portions respectively provided at end portions on both sides in the axial line direction of the device body.

6. The defect detection device according to claim 1 or 2, further comprising a wear-resistant member having a film shape that covers the first inspection surface, the inclined inspection surface, and the second inspection surface.

7. A method for manufacturing the defect detection device according to claim 1 or 2, the method comprising:
a step of acquiring dimensions of each part with respect to a shape of the slot;
a step of forming the device body by three-dimensional additive manufacturing, on the basis of the dimensions; and
a step of mounting the array coils and the permanent magnets.
